# EUROPÄISCHE PATENTSCHRIFT

(11) **EP 3 739 365 B1**
(45) Veröffentlichungstag und Bekanntmachung des Hinweises auf die Patenterteilung: **24.04.2024**
(21) Anmeldenummer: 19174065.3
(22) Anmeldetag: 13.05.2019
(51) Int. Cl.: G01V 8/20, G01V 8/12

(54) **OPTISCHER SENSOR**
OPTICAL SENSOR
CAPTEUR OPTIQUE

(43) Veröffentlichungstag der Anmeldung: 18.11.2020
(73) Patentinhaber: Leuze electronic GmbH + Co. KG, 73277 Owen/Teck (DE)
(72) Erfinder: Feller, Bernhard, 86316 Friedberg (DE); Rauscher, Thorsten, 81379 München (DE); Pychal, Martin, 85221 Dachau (DE); Olbrich, Sebastian, 80992 München (DE); Hörderich, Johann, 82291 Mammendorf (DE)
(74) Vertreter: Ruckh, Rainer Gerhard

(56) Entgegenhaltungen:
- EP-A1- 2 881 760
- DE-A1- 3 939 191
- DE-A1- 4 224 784
- DE-A1- 19 537 615
- DE-A1- 19 613 940
- DE-A1- 19 848 949
- DE-A1- 19 924 351

## Beschreibung

Die Erfindung betrifft einen optischen Sensor gemäß dem Oberbegriff des Anspruchs 1.

Ein derartiger optischer Sensor ist aus der EP 3 244 237 A1 bekannt. Dieser optische Sensor umfasst wenigstens einen Sender, wenigstens einem Empfänger und eine Datenauswerteeinheit. In der Datenauswerteeinheit wird anhand von am Ausgang des Empfängers anstehenden Empfangssignalen geprüft, ob eine eine Codierung bildende Folge von vom Sender emittierten Lichtpulsen im Empfänger registriert wird. Abhängig hiervon wird ein binäres Schaltsignal generiert. Eine Synchronisationseinheit ist vorgesehen, mittels derer der Sender und Empfänger zeitlich synchron innerhalb vorgegebener Zyklen aktiviert sind. Die vom Sender emittierten Lichtpulse sind in verschiedenen Zyklen zueinander invertiert und/oder zeitlich verschoben. Eine Fremdlichtauswerteeinheit ist vorgesehen, welche zur Erfassung von Fremdlicht innerhalb eines Zyklus nur in den Zeitintervallen, in welchen vom Sender keine Lichtpulse emittiert werden, die Empfangssignale des Empfängers auswertet. Das Funktionsprinzip des optischen Sensors besteht darin, dass der Sender des optischen Sensors in den Zyklen, das heißt Zeitintervallen, in denen er aktiviert ist, die Lichtpulse nicht immer gleich aussendet. Vielmehr sind die Lichtpulse in einem Zyklus zu den Lichtpulsen in einem vorangehenden Zyklus invertiert und/oder zeitversetzt. Während der einzelnen Zyklen wird einerseits mit der Datenauswerteeinheit eine Auswertung der Empfangssignale zur Generierung des binären Schaltsignals vorgenommen. Parallel hierzu erfolgt in der Fremdlichtauswerteeinheit eine Fremdlichterkennung indem die Empfangssignale des Empfängers immer nur in den Sendepausen des Senders ausgewertet werden. Da die Sendezeitpunkte der Lichtpulse innerhalb der Zyklen durch Invertieren und/oder zeitliches Versetzen variiert werden, kann in kurzer Zeit mit der Fremdlichtauswerteeinheit das gesamte Zeitintervall des Zyklus des Senders auf das Vorhandensein von Fremdlicht abgeprüft werden.

Nachteilig hierbei ist, dass für eine Fremdlichterkennung der Sendebetrieb des Senders geändert werden muss.

Die DE 196 13 940 A1 betrifft ein Verfahren zur Elimination von Störsignalen bei einer zwei Schaltzustände "Lichtweg frei" und "Lichtweg nicht frei" aufweisenden Lichtschranke mit einem Sender, einem Empfänger und einer an den Empfänger angeschlossenen Auswerteeinheit. Der Sender sendet periodisch Folgen von Lichtimpulsen und einer darauffolgenden Sendepause *T_{P}* aus, wobei eine Folge eine vorgegebene Anzahl *N_{S}* von Lichtimpulsen umfasst, welche innerhalb eines vorgegebenen Zeitintervalls *T_{S}* emittiert werden. Die auf den Empfänger auftreffende Lichtimpulse werden nur während vorgegebener Zeitintervalle *T_{E}* ausgewertet, wobei das Zeitintervall *T_{E}* geringfügig größer als das Zeitintervall *T_{S}* ist. Die Lichtschranke wechselt in den Schaltzustand "Lichtwegfrei", sobald innerhalb eines Zeitintervalls *T_{E}* genau *N_{S}* Lichtimpulse registriert werden. Die Lichtschranke verbleibt im Schaltzustand "Lichtweg frei", falls während eines vorgegebenen Zeitintervalls *T_{I}*, welches größer oder gleich der Periodendauer *T* = *T_{S}* + *T_{P}* ist, empfangsseitig innerhalb wenigstens eines Zeitintervalls *T_{E}* wenigstens *Nₘᵢₙ* Lichtimpulse registriert werden, wobei 0,5 *N_{S}* < *Nₘᵢₙ* ≤ *N_{S}* ist.

Der Erfindung liegt die Aufgabe zugrunde, die Funktionalität des eingangs genannten optischen Sensors weiter zu verbessern.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten innerhalb eines Überwachungsbereichs, mit einem Sendelichtimpulse emittierenden Sender und einem Empfänger, welche an gegenüberliegenden Rändern des Überwachungsbereichs so angeordnet sind, dass bei freiem Überwachungsbereich die Sendelichtimpulse des Senders auf den Empfänger geführt sind, und mit einer Auswerteeinheit, in welcher in Abhängigkeit von Empfangssignalen des Empfängers ein Objektfeststellungssignal generiert wird. Der Sender emittiert die Sendelichtimpulse periodisch innerhalb von Scanzyklen, wobei die vom Sender emittierten Sendelichtimpulse innerhalb von vorgegebenen Erwartungszeitintervallen vom Empfänger empfangen werden. Die Erwartungszeitintervalle sind an die Dauern der Sendelichtimpulse und an den Abstand zwischen Sendern und Empfängern angepasst. Eine Fremdlichtauswertestufe ist vorgesehen, welche innerhalb eines Beobachtungszeitraums, der kleiner als der Scanzyklus ist, am Empfänger registrierte Lichtimpulse als Fremdlichtimpulse wertet, falls diese außerhalb des Erwartungszeitintervalls empfangen werden.

Ein wesentlicher Vorteil des erfindungsgemäßen optischen Sensors besteht darin, dass ohne Anpassung des Sendebetriebs des oder der Sender eine zuverlässige Erfassung von pulsförmigen Fremdlichteinstrahlungen ermöglicht ist.

Dabei können die Sendelichtimpulse des oder der Sender, welche zur Erfassung von Objekten im Überwachungsbereich eingesetzt werden, eindeutig von eingestrahlten Fremdlichtimpulsen unterschieden werden. Dadurch können Fremdlichteinflüsse bei der Objektdetektion eliminiert werden, wodurch eine hohe Nachweissicherheit bei den mit dem optischen Sensor durchgeführten Objekterfassungen erhalten wird.

Das Funktionsprinzip des erfindungsgemäßen optischen Sensors ist derart, dass der oder die Sender Sendelichtimpulse in einem vorgegebenen Scanzyklus emittieren. Dabei wird der Umstand ausgenutzt, dass innerhalb eines Scanzyklus nicht fortlaufend Sendelichtimpulse emittiert werden, vielmehr existieren Sendepausen zwischen den einzelnen Sendelichtimpulsen.

Entsprechend dem Abstand zwischen Sendern und Empfängern ist die Lichtlaufzeit der Sendelichtimpulse von einem Sender zu einem zugeordneten Empfänger bekannt. Dementsprechend wird als Erwartungshaltung ein an die Sendedauer bei Emittieren eines Sendelichtimpulses ein Erwartungszeitintervall vorgegeben, in welchem der Sendelichtimpuls bei freiem Überwachungsbereich auf den zugeordneten Empfänger auftrifft.

Für eine Objektdetektion erfolgt dann eine Prüfung, ob innerhalb dieses Erwartungszeitintervalls ein Sendelichtimpuls am Empfänger registriert wird. Ist dies der Fall, liegt ein freier Überwachungsbereich vor, ansonsten liegt ein Objekteingriff vor.

Innerhalb eines Beobachtungszeitraums, der kleiner ist als der Scanzyklus wird weiterhin geprüft, ob auf den Empfänger Lichtimpulse außerhalb des diesem zugeordneten Erwartungszeitintervalls registriert werden. Ist dies der Fall, werden die Lichtimpulse als Fremdlichtimpulse gewertet.

Auf diese Weise können einfach und zuverlässig Fremdlichteinflüsse erkannt werden und zwar ohne den Sendebetrieb des oder der Sender ändern zu müssen.

Gemäß einer ersten Variante ist der erfindungsgemäße optische Sensor in Form einer Lichtschranke ausgebildet. In diesem Fall weist der optische Sensor nur einen Sender und einen zugeordneten Empfänger auf. In diesem Fall emittiert der Sender periodisch einen einzelnen Sendelichtimpuls oder mehrere Sendelichtimpulse. Diese Sendeperiode entspricht dann dem Scanzyklus.

Gemäß einer zweiten Variante ist der optische Sensor ein Lichtvorhang mit mehreren Sender-Empfänger-Paaren, welche innerhalb von Scanzyklen zyklisch aktiviert sind.

Die Zyklusdauer, innerhalb derer die Sender aktiviert werden um einen oder mehrere Sendelichtimpulse zu emittieren, bildet dann die Scanzyklen.

Prinzipiell können dann, wenn die einzelnen Sender unterschiedliche Folgen von Sendelichtimpulsen emittieren, die individuelle Kodierungen ausbilden, gleichzeitig aktiviert werden. Dann bildet wieder die Periodendauer dieser Senderaktivierung den Scanzyklus.

Besonders vorteilhaft sind die Sender-Empfänger-Paare innerhalb eines Scanzyklus einzeln nacheinander aktiviert.

Dann bildet ein Zyklus, in dem alle Sender nacheinander aktiviert werden, einen Scanzyklus.

Bei allen Varianten werden Fremdlichtimpulse innerhalb eines Beobachtungszeitraums kleiner als der Scanzyklus dadurch erfasst, dass diese außerhalb eines Erwartungszeitintervalls für den oder einen Empfänger registriert werden.

Emittiert dabei ein Sender mehrere Sendelichtimpulse, kann hierfür ein gemeinsames Erwartungszeitintervall oder für jeden Einzel-Sendelichtimpuls jeweils ein separates Erwartungszeitintervall definiert werden.

Mit dieser Störlichterfassung kann nur pulsförmiges Fremdlicht erfasst werden. Zur weiteren Erhöhung der Nachweissicherheit ist eine Signalaufbereitung vorgesehen, mittels derer Gleichlichtanteile aus den Empfangssignalen entfernt sind.

Vorteilhaft ist bei allen Varianten das Objektfeststellungssignal als binäres Schaltsignal ausgebildet, dessen Schaltzustände angeben, ob ein Objekt im Überwachungsbereich vorhanden ist oder nicht.

Dabei wird das Objektfeststellungssignal über einen Schaltausgang ausgegeben.

Damit wird eine reine Anwesenheitskontrolle von Objekten durchgeführt. Dies lässt sich auf eine einfache Weise durch eine Schwellwertbewertung der Empfangssignale realisieren, anhand derer einfach und zuverlässig festgestellt wird, ob in einem Erwartungszeitintervall der jeweilige Empfänger einen Sendelichtimpuls empfängt oder nicht.

Besonders vorteilhaft sind Signalisierungsmittel zur Signalisierung von Fremdlichteinwirkungen vorgesehen.

Anhand der Signalisierungsmittel erfolgt somit eine Statusmeldung ob der optische Sensor Fremdlicht ausgesetzt ist oder nicht.

Eine Signalisierung von Fremdlicht kann prinzipiell bereits dann erfolgen, wenn einmalig innerhalb eines Scanzyklus ein Fremdlichtimpuls registriert wird.

Derartige kurzzeitige einmalige Störlichteinstrahlungen werden jedoch den Betrieb des optischen Sensors nicht nennenswert beeinträchtigen. Eine Beeinträchtigung des optischen Sensors wird erst dann zu befürchten sein, wenn über einen gewissen Zeitraum mehrfach Störlicht in den optischen Sensor eingestrahlt wird.

Um diesem Umstand Rechnung zu tragen, wird in der Fremdlichtauswertestufe die Anzahl von Fremdlichtimpulsen gezählt und diese Anzahl mit einem Schwellwert verglichen.

Vorteilhaft wird die Anzahl von Fremdlichtimpulsen über mehrere Beobachtungszeiträume ermittelt.

Dabei erfolgt mit dem Signalisierungsmittel eine Signalisierung von Fremdlicht nur dann, wenn die Anzahl der Fremdlichtimpulse größer als der Schwellwert ist.

Damit erfolgt eine Aktivierung des Signalisierungsmittels nur dann, wenn eine hinreichend starke Störeinstrahlung vorliegt, wobei das Maß der kritischen Störeinstrahlung, die zur Aktivierung der Signalisierungsmittel führt, applikationsspezifisch durch den Schwellwert vorgegeben werden kann.

Gemäß einer ersten Variante ist als Signalisierungsmittel ein Anzeigemittel vorgesehen.

Das Anzeigemittel kann vorteilhaft in Form einer optischen Anzeige ausgebildet sein.

In diesem Fall wird durch das Anzeigemittel einem Benutzer signalisiert, ob ein störungsfreier Betrieb des optischen Sensors vorliegt oder nicht.

Gemäß einer zweiten Variante ist als Signalisierungsmittel ein Ausgang vorgesehen.

Über den Ausgang wird bei Auftreten von Störlicht eine entsprechende Meldung ausgegeben. Diese kann zur Ansteuerung eines externen Anzeigemittels dienen. Weiterhin kann die Meldung auch zu Steuerungszwecken verwendet werden. Beispielsweise kann dadurch eine vom optischen Sensor überwachte Maschine oder dergleichen in einen langsameren, nicht gefahrbringenden Betriebsmodus geschaltet werden, wenn die Meldung registriert wird, da dann die Zuverlässigkeit der Überwachung mit dem optischen Sensor beeinträchtigt sein kann.

Gemäß einer dritten Variante wird in der Auswerteeinheit eine Fremdlichteinwirkung als Objektfeststellung gewertet.

Insbesondere nimmt bei einer als Fremdlichteinwirkung, die als Objektfeststellung gewertet wird, das binäre Schaltsignal den Schaltzustand, dass ein Objekt im Überwachungsbereich vorhanden ist, ein.

In diesem Fall geht die Fremdlichterkennung direkt in die Generierung des Objektfeststellungssignals ein, das heißt die Erkennung von Störlicht wird als Erkennung eines Objekts gewertet, wodurch unmittelbar eine Überwachungsfunktion ausgelöst wird.

Dies ist insbesondere dann vorteilhaft, wenn der optische Sensor ein Sicherheitssensor ist, der für sicherheitstechnische Applikationen eingesetzt wird. In diesem Fall werden mit dem optischen Sensor sicherheitskritische Objekte erfasst. Das dadurch generierte Schaltsignal bildet dann ein Sicherheitssignal mit dem eine überwachte Maschine oder Anlage abgeschaltet oder allgemein in einen sicheren Zustand, in welchem von der Maschine oder Anlage keine Gefahren mehr ausgehen können, gebracht wird. Das Auftreten von Störlicht kann die Funktion des optischen Sensors beeinträchtigen, so dass aus Sicherheitsgründen auch in diesem Fall ein Objektfeststellungssignal generiert wird, das zum Abschalten der Maschine oder Anlage führt.

Zur Erfüllung der sicherheitstechnischen Anforderungen weist der als Sicherheitssensor ausgebildete optische Sensor einen fehlersicheren Aufbau auf, was zum Beispiel durch einen redundanten, das heißt zweikanaligen Aufbau der Auswerteeinheit und der Ausgangsbeschaltung realisiert werden kann.

Die Signalisierungsmittel werden vorteilhaft dann wieder deaktiviert, wenn über einen vorgegebenen Zeitraum keine Fremdlichtimpulse mehr erkannt werden.

Die Erfindung wird im Folgenden anhand der Zeichnungen erläutert. Es zeigen:
- Figur 1:: Ausführungsbeispiel des erfindungsgemäßen optischen Sensors.
- Figur 2:: Zeitdiagramm mit dem Sendebetrieb des optischen Sensors gemäß Figur 1.
- Figur 3:: Ausschnitt des Zeitdiagramms gemäß Figur 2 mit Sendelichtimpulsen und diesen zugeordneten Erwartungszeitintervallen.

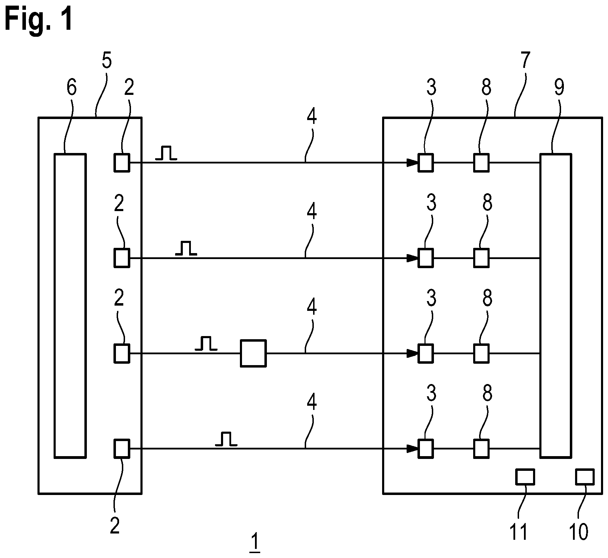

Figur 1 zeigt ein Ausführungsbeispiel des erfindungsgemäßen optischen Sensors 1 in Form eines Lichtvorhangs.

Der Lichtvorhang weist vier Sender 2 und vier Empfänger 3 auf, welche an gegenüberliegenden Rändern eines Überwachungsbereichs angeordnet sind, innerhalb dessen mit dem optischen Sensor 1 eine Objekterfassung erfolgt. Jeder Sender 2 emittiert Lichtstrahlen 4 in Form von Sendelichtimpulsen. Die Sender 2 können von Leuchtdioden gebildet sein, die Empfänger 3 von Photodioden. Jedem Sender 2 bzw. Empfänger 3 kann eine Optik vorgeordnet sein. (In Figur 1 nicht dargestellt.)

Die Sender 2 sind in einem ersten Gehäuse 5 integriert und werden von einer Sendesteuerung 6 gesteuert. Die Empfänger 3 sind in einem zweiten Gehäuse 7 integriert. In den Gehäusen 5, 7 sind nicht dargestellte Fenster integriert, durch welche die Lichtstrahlen 4 geführt sind. Jedem Empfänger 3 ist ein Verstärker 8 nachgeordnet, der die am jeweiligen Empfänger 3 anstehenden Empfangssignale verstärkt. Zudem werden mit dem Verstärker 8 Gleichlichtanteile weggefiltert.

Die verstärkten Empfangssignale werden einer Auswerteeinheit 9 zugeführt. In dieser wird aus den Empfangssignalen ein Objektfeststellungssignal generiert.

Zudem ist in der Auswerteeinheit 9 eine Fremdlichtauswertestufe zur Erfassung von pulsförmigem Fremdlicht vorgesehen.

Prinzipiell kann auch nur ein Verstärker 8 vorgesehen sein, der über die Auswerteeinheit 9 so angesteuert wird, dass dieser im Multiplex Betrieb betrieben wird, so dass dieser die Empfangssignale aller Empfänger 3 verstärken kann.

Der optische Sensor 1 ist im vorliegenden Fall als Sicherheitssensor ausgebildet und weist einen entsprechenden fehlersicheren Aufbau auf. Dies wird im vorliegenden Fall durch eine zweikanalige Auswerteeinheit 9 in Form zweier sich gegenseitig zyklisch überwachenden Rechnereinheiten realisiert.

Wie Figur 1 zeigt bilden die Sender 2 und Empfänger 3 vier Sender-Empfänger-Paare, wobei jedes Sender-Empfänger-Paar von einem Sender 2 und einem gegenüberliegenden Empfänger 3 gebildet ist. Bei freiem Überwachungsbereich gelangen die von einem Sender 2 emittierten Sendelichtimpulse ungehindert zum Empfänger 3 des jeweiligen Sender-Empfänger-Paars.

Natürlich kann der Lichtvorhang auch eine andere Anzahl von Sender-Empfänger-Paaren aufweisen. Generell kann auch nur ein Sender-Empfänger-Paar vorgesehen sein. Dann bildet der optische Sensor 1 eine Lichtschranke.

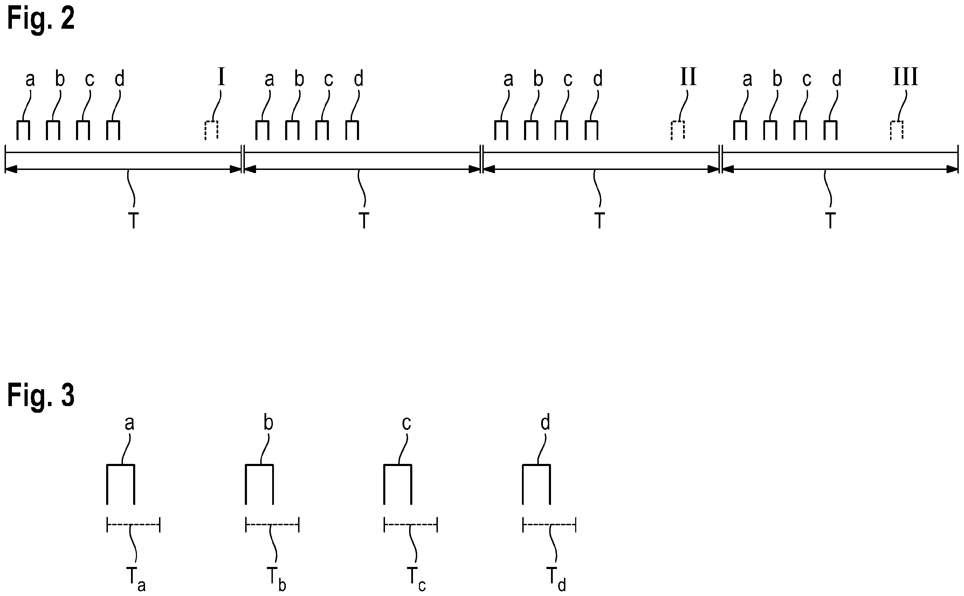

Die Arbeitsweise des optischen Sensors 1 gemäß Figur 1 ist in den Zeitdiagrammen gemäß den Figuren 2 und 3 veranschaulicht.

Durch eine optische Synchronisierung werden in bekannter Weise innerhalb eines Scanzyklus T die einzelnen Sender-Empfänger-Paare zyklisch einzeln nacheinander aktiviert, wobei sich diese zyklische Einzelaktivierung innerhalb folgenden Scanzyklen T periodisch fortsetzt.

Bei der Aktivierung des ersten Senders 2 emittiert dieser einen einzelnen Sendelichtimpuls a. Entsprechend emittieren der zweite, dritte und vierte Sender 2 Sendelichtimpulse a, b, c, d (Figur 2).

Wie Figur 3 zeigt, ist jedem Sendelichtimpuls a, b, c, d ein Erwartungszeitintervall Tₐ, T_{b}, T_{c}, T_{d} zugeordnet, das an die Dauer eines Sendelichtimpulses und an den Abstand zwischen Sendern 2 und Empfängern 3 angepasst ist, und zwar derart, dass bei freiem Überwachungsbereich der Sendelichtimpulse a, b, c, d eines Senders 2 vom zugehörigen Empfänger 3 des Sender-Empfänger-Paars innerhalb des Erwartungszeitintervalls Tₐ, T_{b}, T_{c}, T_{d} empfangen wird.

Ist ein Objekt im Überwachungsbereich, so wird wenigstens der Lichtweg eines Sender-Empfänger-Paars unterbrochen (im Fall von Figur 1 das dritte Sender-Empfänger-Paar). Dementsprechend empfängt der Empfänger 3 dieses Sender-Empfänger-Paars innerhalb des Erwartungszeitintervalls kein Sendelichtimpuls c.

Abhängig hiervon wird in der Auswerteeinheit 9 als Objektfeststellungssignal ein binäres Schaltsignal generiert, dessen Schaltzustände angeben, ob sich ein Objekt im Überwachungsbereich befindet oder nicht.

Empfangen alle Empfänger 3 innerhalb des Erwartungszeitintervalls Tₐ, T_{b}, T_{c}, T_{d} Sendelichtimpulse der zugeordneten Sender 2 liegt ein freier Überwachungsbereich vor, so dass in der Auswerteeinheit 9 ein Schaltsignal mit dem entsprechenden Schaltzustand generiert wird.

Wird wenigstens der Lichtweg eines Sender-Empfänger-Paars durch ein Objekt unterbrochen, so empfängt der zugehörige Empfänger 3 innerhalb des Erwartungszeitintervalls keine Sendelichtimpulse und in der Auswerteeinheit 9 wird das Schaltsignal mit dem Schaltzustand "Objekt vorhanden" generiert.

Zur Beurteilung, ob ein Objekteingriff vorliegt, wird in der Auswerteeinheit 9 eine Schwellwertbewertung der Empfangssignale durchgeführt.

Das so generiete Schaltsignal wird über einen Schaltausgang 10 ausgegeben.

Erfindungsgemäß ist eine Fremdlichtauswertestufe vorgesehen, mit der pulsförmiges Fremdlicht erfasst werden kann. Im vorliegenden Fall ist die Fremdlichtauswertestufe in der Auswerteeinheit 9 integriert.

Hierzu wird, vorzugsweise während jeden Scanzyklus T, innerhalb eines Beobachtungszeitraums, der kleiner ist als der Scanzyklus, geprüft, ob ein Lichtimpuls an einem Empfänger 3 empfangen wird, der außerhalb des Erwartungszeitintervalls dieses Empfängers 3 liegt. Wird damit ein Lichtimpuls innerhalb des Beobachtungszeitraums erfasst, der außerhalb des Beobachtungszeitraums aller Empfänger 3 liegt, wird dieser in der Fremdlichtauswertestufe als Fremdlichtimpuls gewertet. Derartige Fremdlichtimpulse sind in Figur 2 mit I, II, III bezeichnet.

Wie Figur 2 zeigt, trifft im ersten dargestellten Scanzyklus T ein Fremdlichtimpuls I auf, während im zweiten Scanzyklus T kein Fremdlichtimpuls auftritt und im dritten und vierten wiederum jeweils ein Fremdlichtimpuls II, III auftritt.

Bei Auftreten von derartigem pulsförmigem Fremdlicht werden Signalisierungsmittel aktiviert, um das Auftreten des Fremdlichts zu signalisieren.

Bei dem Ausführungsbeispiel gemäß Figur 1 ist als Signalisierungsmittel ein Anzeigemittel 11 vorgesehen, die im vorliegenden Fall in Form einer optischen Anzeige ausgebildet ist. Diese kann im einfachsten Fall von einer Leuchtdiode gebildet sein, die bei Auftreten von Fremdlicht von der Fremdlichtauswertestufe so angesteuert wird, dass sie in einer bestimmten Farbe leuchtet. Alternativ oder zusätzlich kann als Signalisierungsmittel ein weiterer Ausgang vorgesehen sein, der von der Fremdlichtauswertestufe so angesteuert wird, dass bei Auftreten von Fremdlicht über den Ausgang eine Störmeldung ausgegeben wird.

Alternativ oder zusätzlich kann das Auftreten von Fremdlicht in der Fremdlichtauswertestufe und der Auswerteeinheit 9 als Objektfeststellung gewertet werden. Wird dem zufolge eine Fremdlichteinstrahlung registriert, nimmt das Schaltsignal den Schaltzustand "Objekt vorhanden" ein, und zwar unabhängig davon, ob im Überwachungsbereich ein Objekt vorhanden ist oder nicht.

Prinzipiell kann bereits bei Registrieren eines einzelnen Fremdlichtimpulses bereits das Signalisierungsmittel aktiviert werden. Das Signalisierungsmittel bleibt dann für einen vorgegebenen Zeitraum aktiviert und wird erst dann deaktiviert, wenn keine Fremdlichtimpulse mehr registriert werden. Bei dem Beispiel gemäß Figur 2 wird demzufolge das Signalisierungsmittel bereits nach Registrieren des ersten Fremdlichtimpulses I aktiviert.

Um ein einmaliges Aktivieren des Signalisierungsmittels bei Auftreten nur eines einzelnen Fremdlichtimpulses, der die Funktion des optischen Sensors nicht nennenswert beeinträchtigt, zu vermeiden, können über eine vorgegebene Anzahl von Scanzyklen die dort auftretenden Fremdlichtimpulse gezählt werden. Dann wird das Signalisierungsmittel nur dann aktiviert, wenn die in diesem Zeitintervall registrierte Anzahl von Fremdlichtimpulsen einen vorgegebenen Schwellwert überschreitet.

Wird bei dem Beispiel gemäß Figur 2 die Anzahl der Fremdlichtimpulse über vier Scanzyklen T gewählt, so wird beispielsweise das Signalisierungsmittel aktiviert, wenn der Schwellwert Nₛ = z ist, nicht aber wenn der Schwellwert höher liegt.

### Bezugszeichenliste

- (1): Optischer Sensor
- (2): Sender
- (3): Empfänger
- (4): Lichtstrahlen
- (5): Gehäuse, erstes
- (6): Sendesteuerung
- (7): Gehäuse, zweites
- (8): Verstärker
- (9): Auswerteeinheit
- (10): Schaltausgang
- (11): Anzeigemittel

- T: Skanzyklus
- a - d: Sendelichtimpuls
- Tₐ - T_{d}: Erwartungszeitintervall

## Patentansprüche

1. Optischer Sensor (1) zur Erfassung von Objekten innerhalb eines Überwachungsbereichs, mit einem Sendelichtimpulse emittierenden Sender (2) und einem Empfänger (3), welche an gegenüberliegenden Rändern des Überwachungsbereichs so angeordnet sind, dass bei freiem Überwachungsbereich die Sendelichtimpulse des Senders (2) auf den Empfänger (3) geführt sind, und mit einer Auswerteeinheit (9), in welcher in Abhängigkeit von Empfangssignalen des Empfängers (3) ein Objektfeststellungssignal generiert wird, **dadurch gekennzeichnet, dass** der Sender (2) die Sendelichtimpulse periodisch innerhalb von Scanzyklen emittiert, wobei die vom Sender (2) emittierten Sendelichtimpulse innerhalb von vorgegebenen Erwartungszeitintervallen vom Empfänger (3) empfangen werden, wobei die Erwartungszeitintervalle an die Dauern der Sendelichtimpulse und an den Abstand zwischen Sendern (2) und Empfängern (3) angepasst sind, und dass eine Fremdlichtauswertestufe vorgesehen ist, welche innerhalb eines Beobachtungszeitraums, der kleiner als der Scanzyklus ist, am Empfänger (3) registrierte Lichtimpulse als Fremdlichtimpulse wertet, falls diese außerhalb des Erwartungszeitintervalls empfangen werden.

2. Optischer Sensor (1) nach Anspruch 1, **dadurch gekennzeichnet, dass** dieser eine Lichtschranke ist.

3. Optischer Sensor (1) nach Anspruch 1, **dadurch gekennzeichnet, dass** dieser ein Lichtvorhang mit mehreren Sender-Empfänger-Paaren ist, welche innerhalb von Scanzyklen zyklisch aktiviert sind.

4. Optischer Sensor (1) nach Anspruch 3, **dadurch gekennzeichnet, dass** die Sender-Empfänger-Paare innerhalb eines Scanzyklus einzeln nacheinander aktiviert sind.

5. Optischer Sensor (1) nach einem der Ansprüche 1 - 4, **dadurch gekennzeichnet, dass** eine Signalaufbereitung vorgesehen ist, mittels derer Gleichlichtanteile aus den Empfangssignalen entfernt sind.

6. Optischer Sensor (1) nach einem der Ansprüche 1 - 3, **dadurch gekennzeichnet, dass** ein oder mehrere Sender (2) innerhalb eines Scanzyklus mehrere Sendelichtimpulse emittieren, die jeweils in einem oder in einem gemeinsamen Erwartungszeitintervall am zugeordneten Empfänger (3) empfangen werden.

7. Optischer Sensor (1) nach einem der Ansprüche 1 - 6, **dadurch gekennzeichnet, dass** Signalisierungsmittel zur Signalisierung von Fremdlichteinwirkungen vorgesehen sind.

8. Optischer Sensor (1) nach einem der Ansprüche 1 - 7, **dadurch gekennzeichnet, dass** in der Fremdlichtauswertestufe die Anzahl von Fremdlichtimpulsen gezählt wird und diese Anzahl mit einem Schwellwert verglichen wird.

9. Optischer Sensor (1) nach Anspruch 8, **dadurch gekennzeichnet, dass** die Anzahl von Fremdlichtimpulsen über mehrere Beobachtungszeiträume ermittelt wird.

10. Optischer Sensor (1) nach einem der Ansprüche 8 oder 9, **dadurch gekennzeichnet, dass** mit dem Signalisierungsmittel eine Signalisierung von Fremdlicht nur dann erfolgt, wenn die Anzahl der Fremdlichtimpulse größer als der Schwellwert ist.

11. Optischer Sensor (1) nach einem der Ansprüche 7 - 10, **dadurch gekennzeichnet, dass** als Signalisierungsmittel ein Anzeigemittel (11) vorgesehen ist.

12. Optischer Sensor (1) nach einem der Ansprüche 1 - 10, **dadurch gekennzeichnet, dass** als Signalisierungsmittel ein Ausgang vorgesehen ist.

13. Optischer Sensor (1) nach einem der Ansprüche 1 - 10, **dadurch gekennzeichnet, dass** in der Auswerteeinheit (9) eine Fremdlichteinwirkung als Objektfeststellung gewertet wird.

14. Optischer Sensor (1) nach einem der Ansprüche 1 - 13, **dadurch gekennzeichnet, dass** das Objektfeststellungssignal als binäres Schaltsignal ausgebildet ist, dessen Schaltzustände angeben ob ein Objekt im Überwachungsbereich vorhanden ist oder nicht.

15. Optischer Sensor (1) nach einem der Ansprüche 1 - 14, **dadurch gekennzeichnet, dass** das Objektfeststellungssignal über einen Schaltausgang (10) ausgegeben wird.

16. Optischer Sensor (1) nach einem der Ansprüche 14 oder 15, **dadurch gekennzeichnet, dass** bei einer als Fremdlichteinwirkung, die als Objektfeststellung gewertet wird, das binäre Schaltsignal den Schaltzustand, dass ein Objekt im Überwachungsbereich vorhanden ist, einnimmt.

17. Optischer Sensor (1) nach einem der Ansprüche 1 - 16, **dadurch gekennzeichnet, dass** dieser ein Sicherheitssensor ist.

## Claims

1. An optical sensor (1) for detecting objects within a surveillance area, with a transmitter (2) emitting transmitted light pulses and a receiver (3), which are arranged at opposite edges of the surveillance area in such a way that, when the surveillance area is free, the transmitted light pulses of the transmitter (2) are guided to the receiver (3), and with an evaluation unit (9) in which an object detection signal is generated as a function of received signals from the receiver (3), **characterised in that** the transmitter (2) emits the transmitted light pulses periodically within scan cycles, wherein the transmitted light pulses emitted by the transmitter (2) are received by the receiver (3) within predetermined expectation time intervals, the expectation time intervals being adapted to the durations of the transmitted light pulses and to the distance between transmitters (2) and receivers (3), and **in that** an extraneous light evaluation stage is provided which evaluates light pulses registered at the receiver (3) within an observation period which is shorter than the scan cycle as extraneous light pulses if these are received outside the expected time interval.

2. An optical sensor (1) according to claim 1, **characterised in that** it is a light barrier.

3. An optical sensor (1) according to claim 1, **characterised in that** it is a light curtain with several transmitter-receiver pairs which are cyclically activated within scan cycles.

4. An optical sensor (1) according to claim 3, **characterised in that** the transmitter-receiver pairs are activated individually one after the other within a scan cycle.

5. An optical sensor (1) according to one of claims 1 to 4, **characterised in that** signal processing is provided by means of which constant light components are removed from the received signals.

6. An optical sensor (1) according to one of claims 1 to 3, **characterised in that** one or more transmitters (2) emit a plurality of transmitted light pulses within a scan cycle, which are each received at the associated receiver (3) in one or in a common expectation time interval.

7. An optical sensor (1) according to one of claims 1 to 6, **characterised in that** signalling means are provided for signalling extraneous light effects.

8. An optical sensor (1) according to one of claims 1 to 7, **characterised in that** the number of ambient light pulses is counted in the ambient light evaluation stage and this number is compared with a threshold value.

9. An optical sensor (1) according to claim 8, **characterised in that** the number of ambient light pulses is determined over several observation periods.

10. An optical sensor (1) according to one of claims 8 or 9, **characterised in that** the signalling means only signals extraneous light if the number of extraneous light pulses is greater than the threshold value.

11. An optical sensor (1) according to one of claims 7 to 10, **characterised in that** a display means (11) is provided as signalling means.

12. An optical sensor (1) according to one of claims 1 to 10, **characterised in that** an output is provided as signalling means.

13. An optical sensor (1) according to one of claims 1 to10, **characterised in that** an external light effect is evaluated as object detection in the evaluation unit (9).

14. An optical sensor (1) according to one of claims 1 to 13, **characterised in that** the object detection signal is in the form of a binary switching signal, the switching states of which indicate whether an object is present in the surveillance area or not.

15. An optical sensor (1) according to one of claims 1 to 14, **characterised in that** the object detection signal is output via a switching output (10).

16. An optical sensor (1) according to one of claims 14 or 15, **characterised in that** in the event of an extraneous light effect, which is evaluated as object detection, the binary switching signal assumes the switching state that an object is present in the surveillance area.

17. An optical sensor (1) according to one of claims 1 to 16, **characterised in that** it is a safety sensor.

## Revendications

1. Capteur optique (1) pour la détection d'objets dans une zone de surveillance, avec un émetteur (2) émettant des impulsions lumineuses transmises et un récepteur (3), qui sont disposés sur les bords opposés de la zone de surveillance de telle sorte que, lorsque la zone de surveillance est libre, les impulsions lumineuses transmises de l'émetteur (2) sont guidées vers le récepteur (3), et avec une unité d'évaluation (9) dans laquelle un signal de détection d'objet est généré en fonction des signaux reçus du récepteur (3), **caractérisé en ce que** l'émetteur (2) émet les impulsions lumineuses transmises périodiquement à l'intérieur de cycles de balayage, dans lequel les impulsions lumineuses émises par l'émetteur (2) sont reçues par le récepteur (3) dans des intervalles de temps d'attente prédéterminés, les intervalles de temps d'attente étant adaptés aux durées des impulsions lumineuses émises et à la distance entre les émetteurs (2) et les récepteurs (3), et **en ce qu'**une étape d'évaluation de la lumière étrangère est prévue qui évalue les impulsions lumineuses enregistrées sur le récepteur (3) dans une période d'observation plus courte que le cycle de balayage comme des impulsions lumineuses étrangères si elles sont reçues en dehors de l'intervalle de temps d'attente.

2. Capteur optique (1) selon la revendication 1, **caractérisé en ce qu'**il s'agit d'une barrière lumineuse.

3. Capteur optique (1) selon la revendication 1, **caractérisé en ce qu'**il s'agit d'une barrière lumineuse avec plusieurs paires émetteur-récepteur qui sont activées de manière cyclique au cours des cycles de balayage.

4. Capteur optique (1) selon la revendication 3, **caractérisé en ce que** les paires émetteur-récepteur sont activées individuellement l'une après l'autre au cours d'un cycle de balayage.

5. Capteur optique (1) selon l'une des revendications 1 à 4, **caractérisé en ce que** le traitement du signal est assuré au moyen duquel les composantes de lumière constante sont éliminées des signaux reçus.

6. Capteur optique (1) selon l'une des revendications 1 à 3, **caractérisé en ce qu'**un ou plusieurs émetteurs (2) émettent une pluralité d'impulsions lumineuses transmises au sein d'un cycle de balayage, qui sont chacune reçues par le récepteur associé (3) dans un ou dans un intervalle de temps d'attente commun.

7. Capteur optique (1) selon l'une des revendications 1 à 6, **caractérisé en ce que** des moyens de signalisation sont prévus pour signaler les effets lumineux étrangers.

8. Capteur optique (1) selon l'une des revendications 1 à 7, **caractérisé en ce que** le nombre d'impulsions de lumière ambiante est compté dans l'étape d'évaluation de la lumière ambiante et ce nombre est comparé à une valeur seuil.

9. Capteur optique (1) selon la revendication 8, **caractérisé en ce que** le nombre d'impulsions de lumière ambiante est déterminé sur plusieurs périodes d'observation.

10. Capteur optique (1) selon l'une des revendications 8 ou 9, **caractérisé en ce que** le moyen de signalisation ne signale la lumière étrangère que si le nombre d'impulsions de lumière étrangère est supérieur à la valeur seuil.

11. Capteur optique (1) selon l'une des revendications 7 à 10, **caractérisé en ce qu'**un moyen d'affichage (11) est prévu comme moyen de signalisation.

12. Capteur optique (1) selon l'une des revendications 1 à 10, **caractérisé en ce qu'**une sortie est fournie comme moyen de signalisation.

13. Capteur optique (1) selon l'une des revendications 1 à 10, **caractérisé en ce qu'**un effet de lumière externe est évalué comme détection d'objet dans l'unité d'évaluation (9).

14. Capteur optique (1) selon l'une des revendications 1 à 13, **caractérisé en ce que** le signal de détection d'objet se présente sous la forme d'un signal de commutation binaire, dont les états de commutation indiquent si un objet est présent ou non dans la zone de surveillance.

15. Capteur optique (1) selon l'une des revendications 1 à 14, **caractérisé en ce que** le signal de détection d'objet est émis via une sortie de commutation (10).

16. Capteur optique (1) selon l'une des revendications 14 ou 15, **caractérisé par le fait qu'**en cas d'effet de lumière parasite, évalué comme détection d'objet, le signal de commutation binaire prend l'état de commutation selon lequel un objet est présent dans la zone de surveillance.

17. Capteur optique (1) selon l'une des revendications 1 à 16, **caractérisé en ce qu'**il s'agit d'un capteur de sécurité.
